Europäisches Patentamt

European Patent Office

Office européen des brevets

(19)

(11) Publication number: **0 062 394**
**A1**

## (12) EUROPEAN PATENT APPLICATION

(21) Application number: **82300285.2**

(22) Date of filing: **20.01.82**

(51) Int. Cl.³: **G 01 F 1/00, G 01 P 5/00**

(30) Priority: **23.01.81 GB 8102039**

(43) Date of publication of application: **13.10.82**
**Bulletin 82/41**

(84) Designated Contracting States: **BE DE FR IT**

(71) Applicant: **HENDGLADE SECURITIES LIMITED,**
**Hendglade House 46 New Road, Stourbridge West**
**Midlands DY8 1PY (GB)**

(72) Inventor: **McMurray, John Graham, 10 Clear View,**
**Kingswinford West Midlands (GB)**
Inventor: **Mallender, Richard Francis, Hyperion Road**
**Stourton, Nr. Stourbridge West Midlands (GB)**

(74) Representative: **Attfield, Donald James et al, BROOKES,**
**MARTIN & WILSON Prudential Buildings 5 St. Philip's**
**Place, Birmingham B3 2AF (GB)**

(54) **Method for measuring the rate of flow of liquids.**

(57) Disclosed is a method for determing the rate of flow of a liquid material (10) from a closed container (1) to a reaction vessel during a manufacturing process by measuring the rate at which air enters the container to replace the liquid material being transferred to the reaction vessel. To achieve this measurement the container has closed inlet and outlet valves (4) and an air vent (13) to which is attached an inverted U-tube (12) at the open end (14) of which is a flow meter (15) calibrated (18) in terms of rate of flow of liquid material, and including a pointer (17) opposite said calibrations to give a visual display of said rate of flow.

"METHOD FOR MEASURING RATE FLOW OF LIQUIDS"

The present invention relates to a method for the measurement of the rate flow of liquids, especially those used in chemical processes.

In the manufacture of materials involving reacting the mixing together of two or more substances, one of which is a liquid, it is frequently necessary to introduce the liquid material into the reaction at a given rate. This can be done by metering the liquid material into the reaction mixture using a metering pump calibrated to give constant flow. However, such pumps are expensive and frequently unsuitable where corrosive liquids are being employed or where variable rates of flow are required, furthermore they do not, in general, provide a ready visual indication of flow rate.

We have now developed a simple effective method for measuring the rate of flow of liquid into a reaction mixture, for example which also gives a visual display of flow rate.

Accordingly, the present invention provides a method for measuring liquid flow rate from the rate of flow of liquid material transferred from a closed container containing said liquid to a different vessel, said container including an air vent, closable means for filling the container and closable means for transferring liquid therefrom, comprising measuring the rate of flow of air drawn into the container through the said vent to replace liquid transferred therefrom.

The flow meter is preferably calibrated to give a direct visual reading of liquid material flow rate.

The method is especially useful for measuring the rate of flow of liquid materials being supplied to a continuous sand mixing machine in the production of refractory moulds and cores using for example, the cold set resin/catalyst/sand process. In such a machine the reaction vessel may be a "screw" mixing device.

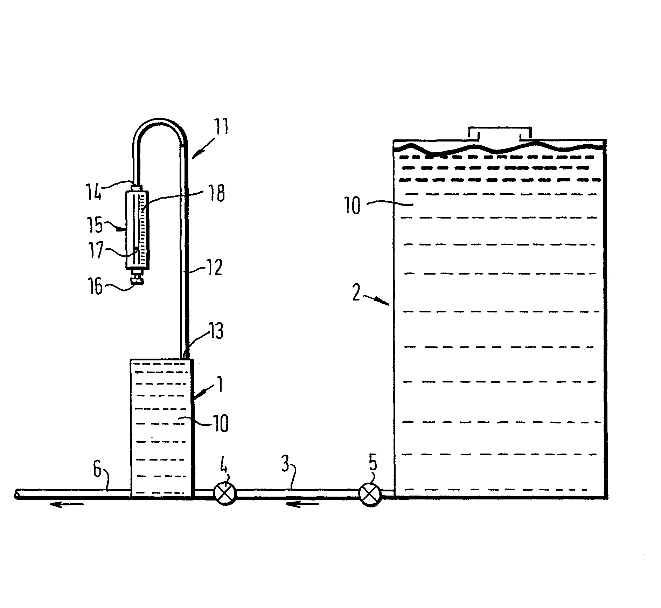

The present invention will now be more fully described with reference to the accompanying drawing which is a schematic representation of one manner of use of the invention.

A closed reservoir container 1 communicates through pipe 3 fitted with on/off valves 4 and 5 with a vented main liquid tank 2 containing a liquid material 10. Supply pipe 6 is connected to a variable output pump (not shown) to transfer liquid material 10 from the reservoir 1 to a reaction vessel (not shown) as required. A vent, generally indicated at 11, comprises an inverted U-tube 12 having one end, 13 communicating with the top of the reservoir container 1 and the other end 14 attached to a flow meter 15. An air filter 16 is attached to the open end of flow meter 15 which includes a floating pointer 17 indicating the rate of flow of air through the meter against a calibrated scale 18. The top of the U-tube 12 is arranged to be above the level of liquid material 10 in the main tank.

In use valves 4 and 5 are first opened to allow reservoir 1 to be gravity filled with liquid material 10 from tank 2. When reservoir 1 is full the liquid material 10 rises in tube 12 to the level of that in tank 2. The top of the tube 12 is arranged to be above the level of liquid material 10 in tank 2 to avoid the said liquid material spilling over into flow meter 15, if valves 4 and 5 are not closed in due time. When transfer of liquid material has been completed valves 4 and 5 are closed. When required for use, liquid material 10 is pumped from reservoir 1 through supply tube 6 to the reaction vessel. As the material is removed from reservoir 1 it is replaced by air drawn through the flow meter 15 and as a consequence, the pointer 17 registers the rate of air flow on scale 18 which is calibrated in litres per hour. Since one litre of liquid material pumped out of reservoir 1 is replaced by an equivalent volume of air, the scale is calibrated in terms of rate of flow
of liquid and provides a ready visual display of the rate at
which the liquid material is being transferred to the reaction
vessel.

Since the liquid material does not contact the measuring device,
the method of this invention can be applied to the determination of the flow rate of corrosive materials used in manufacturing processes.

Claims:

1. A method for measuring the rate of flow of liquid material transferred from a closed container containing said liquid to a different vessel, said container including an air vent, closable means for filling the container and closable means for transferring liquid therefrom, characterised in that the rate of flow of air drawn into the container through the said vent to replace liquid transferred therefrom is measured.

2. A method according to claim 1 characterised in that the rate of flow of air is measured using a flow meter.

3. A method according to claim 2 characterised in that the flow meter is located at the open end of one limb of a U-tube, the end of the other limb of the said U-tube communicating with the said vent located at the top of the said container, whereby air is caused to enter the vent and hence the container through the said U-tube and flow meter as liquid material is transferred from the container, the flow meter thereby measuring the rate at which air replaces the liquid material being transferred whereby the rate of flow of the liquid material from the container is measured.

4. A method according to claim 2 or claim 3 characterised in that the flow meter is calibrated in terms of liquid material flow rate and provides a visual reading of said flow rate.

5. A method for measuring the rate of addition of a liquid resin/or a catalyst into a continuous sand mixing machine in the production of refractory moulds, or cores from a mixture of sand, resin and catalyst characterised in that said resin or catalyst is transferred to the said machine from a container and the rate of addition is determined by measuring the rate at which air is drawn into the container to replace liquid transferred therefrom, said measurement being made by the method of any one of claims 1 to 4.

1 | 1

## DOCUMENTS CONSIDERED TO BE RELEVANT

| Category | Citation of document with indication, where appropriate, of relevant passages | Relevant to claim |
|---|---|---|
| X | CH – A – 293 159 (GAS- & WASSER-MESSERFABRIK A.G.)  <br> * Claims I,II; fig. 1,2 * <br> -- | 1-3 |
| A | DE – B – 1 099 750 (FIRLUS) <br> * Column 1, lines 8-15 * <br> ---- | 1 |

**CLASSIFICATION OF THE APPLICATION (Int. Cl. 3)**

G 01 F 1/00

G 01 P 5/00

**TECHNICAL FIELDS SEARCHED (Int.Cl. 3)**

G 01 F 1/00

G 01 P 5/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document. but published on, or after the filing date
D: document cited in the application
L: document cited for other reasons

&: member of the same patent family, corresponding document

| X | The present search report has been drawn up for all claims |
|---|---|

| Place of search <br> VIENNA | Date of completion of the search <br> 04-05-1982 | Examiner <br> STÖGER |
|---|---|---|

EPO Form 1503.1   06.78